# EUROPEAN PATENT SPECIFICATION

(11) **EP 1 843 918 B1**
(45) Date of publication and mention of the grant of the patent: **27.08.2008**
(21) Application number: 05704739.1
(22) Date of filing: 21.01.2005
(51) Int. Cl.: B60R 3/02

(54) **STEP FOR A VEHICLE**
STUFE FÜR EIN FAHRZEUG
MARCHEPIED POUR VEHICULE

(43) Date of publication of application: 17.10.2007
(73) Proprietor: VOLVO LASTVAGNAR AB, 405 08 Göteborg (SE)
(72) Inventor: KUULA, Olli, S-417 43 Göteborg (SE)
(74) Representative: Fröhling, Werner Otto
(86) International application number: PCT/SE2005/000066
(87) International publication number: WO 2006/078195

(56) References cited:
- DE-A1- 4 229 606
- FR-A1- 2 651 739
- GB-A- 1 430 813
- GB-A- 2 055 705
- JP-A- 4 138 944
- US-B2- 6 612 596

## Description

### TECHNICAL FIELD:

The present invention relates to a folding step assembly according to the preamble of claim 1.

### BACKGROUND ART:

Goods vehicles, such as lorries and other heavy vehicles, are currently often provided with steps arranged inside the door to the cab. These are usually permanently mounted in a recess in the side of the cab and are accessible for use after the door has been opened.

A problem with the design described above is that the recess in which the step is mounted encroaches upon the limited space that is available under the cab, where, among other things, the vehicle's motor is mounted. This leads to problems, as ever-increasing numbers of components belonging, for example, to the motor and cooling system now need to be fitted in the limited space under the cab of the vehicle. A folding step assembly according to the preamble of claim 1 is known from GB- A - 2 055 705.

### DISCLOSURE OF INVENTION:

A main object of the present invention is to provide a step arranged inside a vehicle door that is compact and thereby takes up little space. This object is achieved by means of a folding step assembly according to claim 1.

The invention provides a plurality of advantages. Primarily, it can be noted that, by means of the construction of the invention, a step is obtained that, in its folded-away position, does not encroach upon the limited space that is available under the cab. By means of the location of the step inside the door of the vehicle, a particularly advantageous solution is also obtained, as this location means that the step is well-protected against dirt and other external agents, while at the same time this location is advantageous as far as aerodynamics are concerned.

An additional object of the invention is to provide a step that is designed to be able to be used easily when the door has only been opened a short way. This is achieved by the design of the step, with the step comprising at least one platform constructed of longitudinal and transverse ribs. This platform, that can be used as a step even in a completely folded-away position, is unfolded gradually as the door is opened and is thereby available for use as soon as the door is sufficiently open to give the driver access.

Additional advantageous embodiments of the invention are apparent from the following subsidiary claims.

### BRIEF DESCRIPTION OF DRAWINGS:

The invention will be described in greater detail in the following with reference to the attached drawings, in which:
- Figure 1: shows a schematic perspective view of how a first embodiment of the present invention can be arranged in the cab of a lorry,
- Figure 2: shows a perspective view of a step according to the present invention in its unfolded position,
- Figure 3: shows a perspective view of the step in Figure 2 in its folded-away position,
- Figure 4: shows a perspective view of a link arm mechanism that is utilized in the present invention,
- Figure 5: shows a perspective view of a step in its unfolded position according to an alternative embodiment of the present invention.

### DETAILED DESCRIPTION OF THE INVENTION:

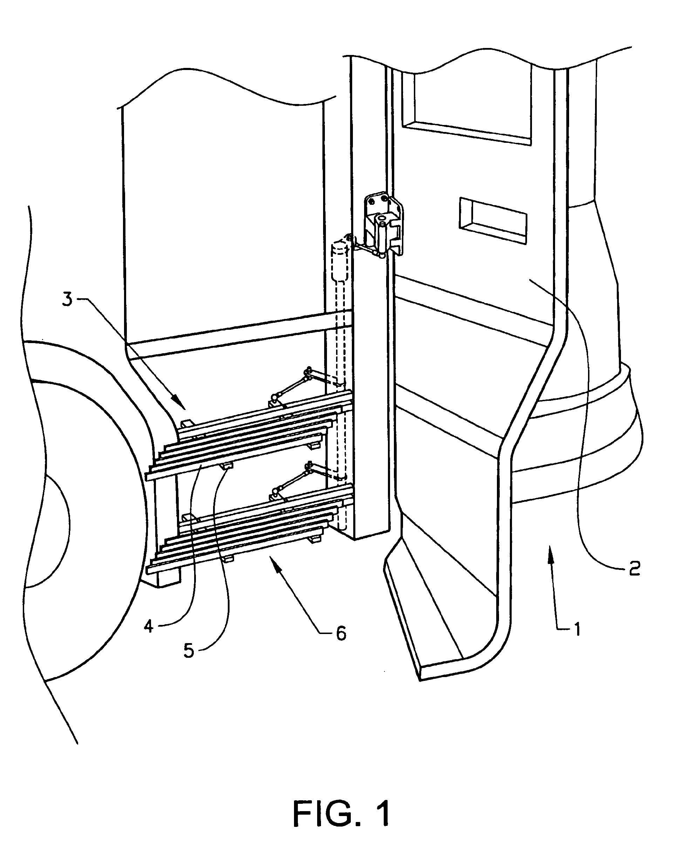

Figure 1 shows a schematic perspective view of how a first embodiment of the present invention can be arranged inside a vehicle door 2 arranged in the cab 1 of a lorry. The step 3 shown in the figure comprises two platforms 6 that are constructed of longitudinal ribs 4 and ribs 5 that run transverse to these, which platforms together form a folding step. It should, however, be pointed out that the number of platforms 6 forming the step 3 can vary, but is preferably between two and four in number.

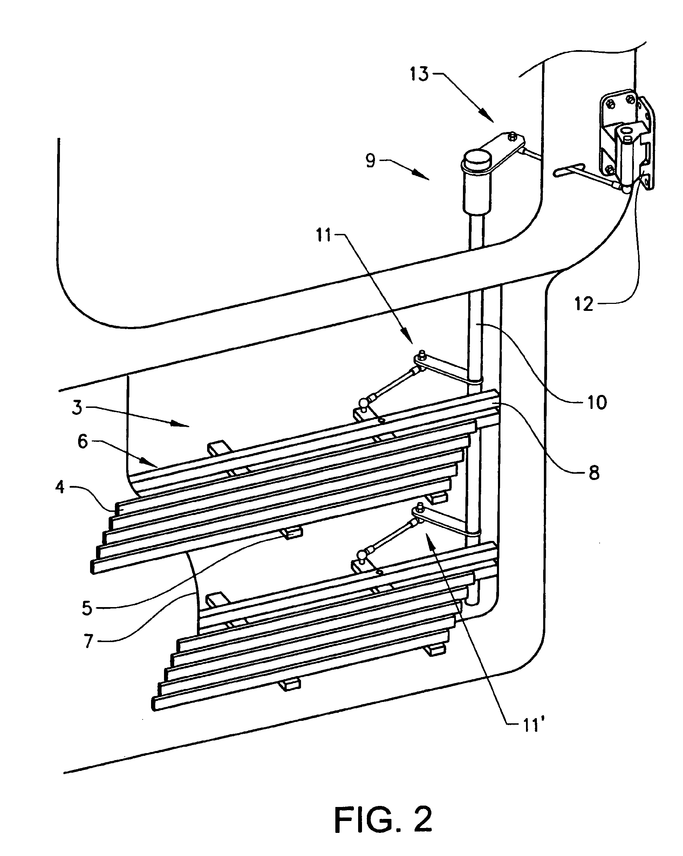

Figure 2 shows a perspective view of a step 3 according to a preferred embodiment of the invention in its unfolded position. The step 3 is arranged in the cab 1 of the vehicle inside the door 2, and is attached below the door opening of the cab on a track 8 fixed to the frame 7 of the side panel.

The step 3 comprises two platforms 6 constructed of longitudinal ribs 4 and of ribs 5 that are transverse to these, which platforms form a folding step. The longitudinal ribs 4, that are connected to the transverse ribs 5 in such a way that they can pivot, have an orientation that essentially coincides with the longitudinal axis of the vehicle. The transverse ribs 5, that are attached to the track 8 at one end in such a way that they can pivot, are arranged to have an orientation that is essentially at right angles to the longitudinal ribs 4 when the step 3 is fully unfolded.

The step 3 is attached to the door of the vehicle 2 via a link arm mechanism 9. The link arm mechanism 9 comprises a vertical shaft 10 mounted in such a way that it can pivot, to which shaft 10 the platforms 6 of the step are attached via a first link arm arrangement 11, 11'. The upper end of the shaft 10 is attached to the hinge 12 of the door via a second link arm arrangement 13, that interacts with the door 2 of the vehicle to achieve folding away and unfolding of the step 3 by rotation of the shaft 10 in association with closing or opening of the door 2.

Figure 2 shows the step 3 in the fully unfolded position, that is when the door of the vehicle 2 is fully open. The link arm arrangement 11,11' has then rotated the transverse ribs 5 of the platform 6 around the vertical shaft 10 in a clockwise direction to a position where they have an orientation essentially at right angles to the longitudinal ribs 4 of the platform.

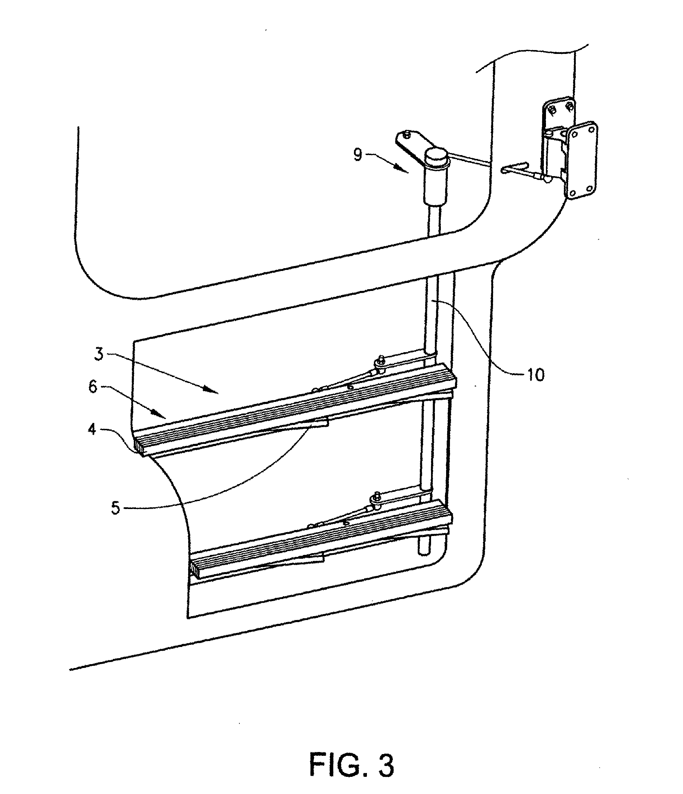

Figure 3 shows a perspective view of the step 3 in Figure 2 in its folded-away position. In this position, the door 2, not shown, is fully closed. The link arm mechanism 9 has then rotated the transverse ribs 5 of the platform 6 around the vertical shaft 10 in an anticlockwise direction, to a position where the longitudinal ribs 4 of the platform are slid together and lie close beside each other with an orientation that essentially coincides with the longitudinal axis of the vehicle. The step can be used by the driver even in this position.

The figure shows that, in its folded-away position, the step is very compact and accordingly does not encroach upon the limited space that is available under the cab.

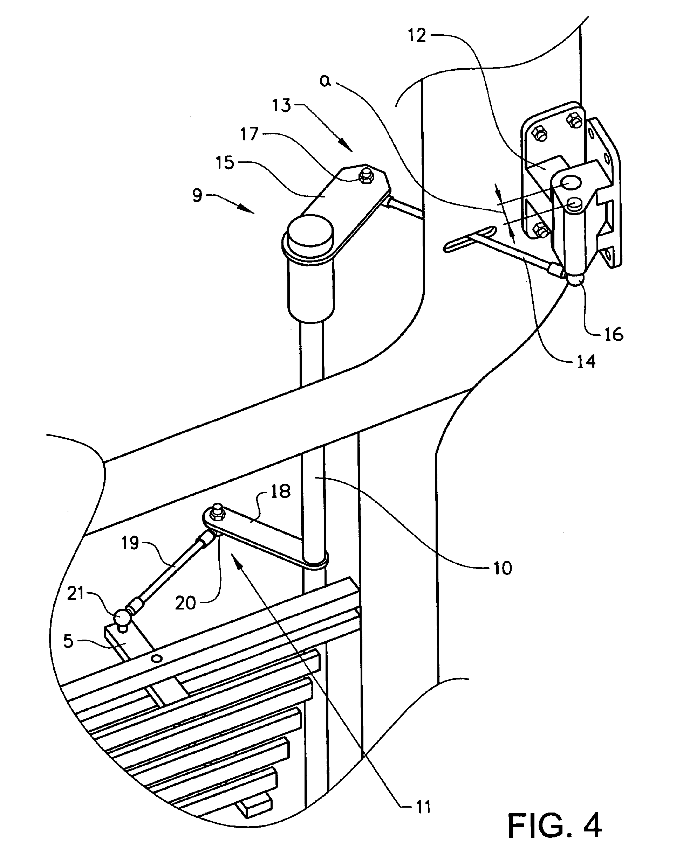

Figure 4 shows a schematic perspective view of the link arm mechanism 9. The link arm mechanism 9 comprises a second link arm arrangement 13, comprising a first link arm 14 and a second link arm 15, with one end of the first link arm 14 being attached, via a first ball joint 16, to the hinge 12 at a distance a from the centre of rotation of the hinge. The other end of the link arm 14 is attached, via a second ball joint 17, to the link arm 15, which link arm 15 is fixed at its other end to the upper end of the vertical shaft 10. The shaft 10 is attached to the platforms 6 of the step via the link arm arrangement 11, 11', which link arm arrangement 11, 11' comprises a first link arm 18 and a second link arm 19, which first link arm 18 is fixed to the shaft 10. At its other end, the link arm 18 is connected, via a first ball joint 20, to the link arm 19, which link arm 19 is connected at its other end, via a second ball joint 21, to one of the transverse ribs 5 of the platform 6.

When the door is opened, its rotational movement is transferred to the shaft 10, via the link arm arrangement 13, which shaft is caused to rotate in a clockwise direction around its vertical axis while the shaft 10 rotates the transverse ribs 5 of the platform, via the link arm arrangement 11, 11', in a clockwise direction to an unfolded position. In a corresponding way, when the door is closed, the rotational movement of the door is transferred, causing the shaft 10 to rotate in an anticlockwise direction and thereby also cause the transverse ribs of the platform to rotate in an anticlockwise direction.

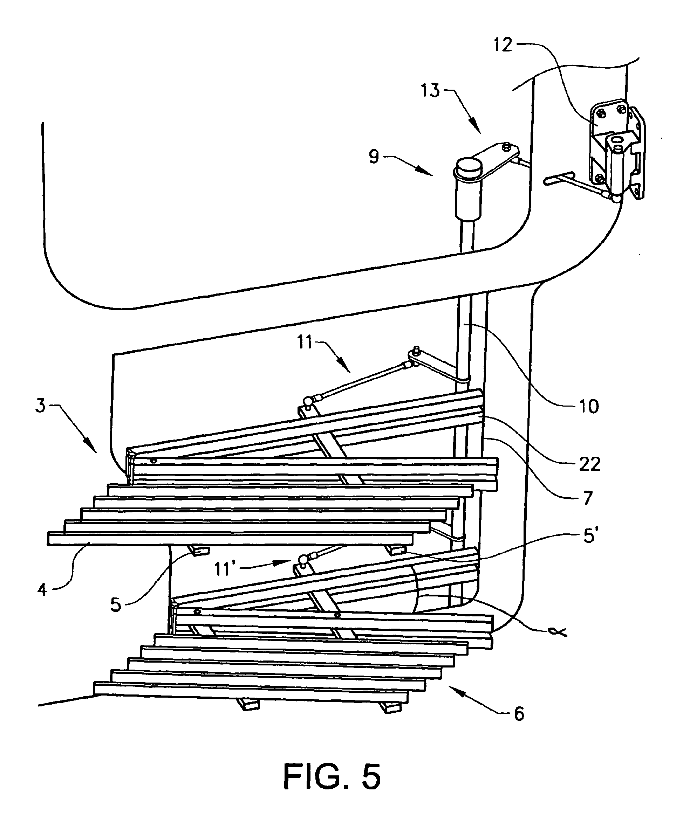

Figure 5 shows an additional embodiment of the invention. For the sake of clarity, the components that correspond to the components that are shown in Figures 1-4 have been given the same reference numerals.

The step 3 comprises two platforms 6, constructed of longitudinal ribs 4 and of ribs 5,5' that are transverse to these, which platforms form a folding step. The longitudinal ribs 4 are connected to the transverse ribs 5, 5' in such a way that they can pivot. The step 3 is connected to a slide rail 22 via the transverse ribs 5,5' in such a way that it can pivot, which slide rail 22 is fixed to the frame 7 of the side panel, and to which slide rail 22 the transverse rib 5' is also mounted in such a way that it can slide.

The step 3 is connected to the door of the vehicle 2 via a link arm mechanism 9. The link arm mechanism 9 comprises a vertical shaft 10 mounted in such a way that it can pivot, to which shaft 10 the platforms 6 of the step are connected via a first link arm arrangement 11, 11'. At its upper end, the shaft 10 is connected to the hinge 12 of the door via a second link arm arrangement 13, that interacts with the door 2 of the vehicle to achieve the folding away or unfolding of the step 3 by rotation of the shaft 10 in association with the closing or opening of the door 2.

The figure shows the step 3 in a fully unfolded position, that is when the door of the vehicle is fully open. The link arm arrangement 11,11' has then rotated the transverse ribs 5 of the platform 6 around the vertical shaft 10 in a clockwise direction to a position where they have an orientation essentially at right angles to the longitudinal axis of the vehicle, while at the same time the rib 5' has slid along the slide rail 22 in the direction of travel of the vehicle. The longitudinal ribs 4 of the platform have then been rotated to a position where they form an angle α with the slide rail 22, where α is between 20 and 35 degrees but is preferably 30 degrees. In their folded-away position, the longitudinal ribs 4 have an orientation that essentially coincides with the longitudinal axis of the vehicle.

The invention is not limited to the embodiment described above and shown in the drawings, but can be varied freely within the framework of the following patent claims. For example, the invention can be used with various types of goods vehicle, such as for example lorries, but can also be used for other types of heavy vehicle, such as wheeled loaders, dumpers, etc.

In the embodiment above, the step is connected mechanically to the door of the vehicle. In another embodiment of the invention (not shown), unfolding and folding away of the steps can alternatively be carried out by an electric motor that is activated by a sensor that detects when the door of the vehicle is opened or closed.

## Claims

1. A folding step assembly (3) arranged inside a vehicle door (2) of a cab (1) of a vehicle, **characterized in that** the folding step assembly (3,) comprises a plurality of platforms (6) connected to a link arm mechanism (9) common thereto, said link arm mechanism (9) comprising a vertical shaft (10) that is connected to the door of the vehicle (2) and mounted in such a way that it can pivot, which link arm mechanism (9) is arranged to cause the plurality of platforms (6), while rotating around the said vertical shaft (10), to all assume an unfolded or folded-away position when the door of the vehicle (2) is opened or closed respectively, and **in that** each of said plurality of platforms (6) are constructed of longitudinal and transverse ribs (4 , 5) whereby the longitudinal ribs (4) are slid together and lie close beside each other in said folded-away position.

2. A step assembly as claimed in claim 1, **characterized in that** the link arm mechanism (9) comprises, in addition, a first link arm arrangement (11, 11') for each platform (6), and a second link arm arrangement (13), and that the door (2) of the vehicle is connected via the second link arm arrangement (13) to the said vertical shaft (10) that is mounted in such a way that it can pivot.

3. A step assembly as claimed in claim 2, **characterized in that** each platform (6) is connected via the first link arm arrangement (11, 11') to the said vertical shaft (10) that is mounted in such a way that it can pivot.

4. A step assembly as claimed in claim 3, **characterized in that** the said longitudinal ribs (4) are connected to the said transverse ribs (5) in such a way that they can pivot, and **in that** the longitudinal ribs (4) have an orientation that essentially coincides with the longitudinal axis of the vehicle, and **in that** the transverse ribs (5) are arranged to assume an orientation that is essentially at right angles to the longitudinal ribs (4) when the step assembly (3) has assumed its fully unfolded position.

5. A step assembly as claimed in any one of claims 2 to 4, **characterized in that** the said first link arm arrangement (11, 11') comprises a first link arm (18), fixed at one end to the shaft (10), and a second link arm (19), connected at one end to a transverse rib (5) via a ball joint (21), which first link arm (18) is connected at the other end to the second link arm (19) via a ball joint (20).

6. A step assembly as claimed in any one of claims 2 to 5, **characterized in that** the said second link arm arrangement (13) comprises a first link arm (14), connected at one end to the hinge (12) of the door of the vehicle via a ball joint (16), and a second link arm (15), fixed at one end to the shaft (10), which first link arm (14) is connected to the second link arm (15) via a ball joint (16).

7. A step assembly as claimed in any one of the preceding claims, **characterized in that** the step assembly (3) comprises at least two platforms (6), constructed of longitudinal and transverse ribs (4 , 5) and disposed in a vertical sequence.

8. A step assembly as claimed in any one of the preceding claims, **characterized in that** the step assembly (3) is attached to a track (8) fixed to the frame (7) of the side panel.

9. A step assembly as claimed in any one of claims 1 to 3, **characterized in that** the step assembly (3) is connected, via the transverse ribs (5 , 5') in such a way that it can pivot, to a slide rail (22) fixed to the frame (7) of the side panel, along which slide rail (22) the transverse rib (5') is arranged to slide.

10. A step assembly as claimed in claim 9, **characterized in that** the transverse ribs (5) are arranged, when the step assembly (3) has assumed its fully unfolded position, to assume an orientation that is essentially at right angles to the longitudinal axis of the vehicle, while the longitudinal ribs (4) form an angle α with the slide rail (22).

11. A step assembly as claimed in claim 10, **characterized in that** the size of the angle α lies in the range 20 < α < 35.

12. A vehicle comprising a vehicle door (2) and a step assembly (3) arranged inside the door of the vehicle (2) as claimed in any one of the preceding claims.

13. A vehicle as claimed in claim 12, **characterized in that** the vehicle consists of a heavy goods vehicle, such as a lorry or wheeled loader.

## Patentansprüche

1. Klappstufenanordnung (3), die innerhalb einer Fahrzeugtür (2) eines Führerhauses (1) eines Fahrzeugs angeordnet ist, **dadurch gekennzeichnet, dass** die Klappstufenanordnung (3) eine Vielzahl von Plattformen (6) umfasst, die mit einem ihnen gemeinsamen Gelenkarmmechanismus (9) verbunden sind, wobei der Gelenkarmmechanismus (9) eine vertikale Welle (10) umfasst, die mit der Tür des Fahrzeugs (2) verbunden und so angebracht ist, dass sie schwenken kann, wobei der Gelenkarmmechanismus (9) so angeordnet ist, dass durch ihn die Vielzahl von Plattformen (6) während einer Drehung um die vertikale Welle (10) alle eine auseinandergeklappte oder weggeklappte Position einnehmen, wenn die Tür des Fahrzeugs (2) geöffnet bzw. geschlossen wird, und dass jede der Vielzahl von Plattformen (8) aus Längs- und Querrippen (4, 5) aufgebaut ist, wobei die Längsrippen (4) in der weggeklappten Position zusammengeschoben sind und nahe nebeneinander liegen.

2. Stufenanordnung nach Anspruch 1, **dadurch gekennzeichnet, dass** der Gelenkarmmechanismus (9) zusätzlich eine erste Gelenkarmanordnung (11, 11') für jede Plattform (6) und eine zweite Gelenkarmanordnung (13) umfasst, und dass die Tür (2) des Fahrzeugs über die zweite Gelenkarmanordnung (13) mit der vertikalen Welle (10) verbunden ist, die so angebracht ist, dass sie schwenken kann.

3. Stufenanordnung nach Anspruch 2, **dadurch gekennzeichnet, dass** jede Plattform (6) über die erste Gelenkarmanordnung (11, 11') mit der vertikalen Welle (10) verbunden ist, die so angebracht ist, dass sie schwenken kann.

4. Stufenanordnung nach Anspruch 3, **dadurch gekennzeichnet, dass** die Längsrippen (4) so mit den Querrippen (5) verbunden sind, dass sie schwenken können, und dass die Längsrippen (4) eine Ausrichtung aufweisen, die im Wesentlichen mit der Längsachse des Fahrzeugs übereinstimmt, und dass die Querrippen (5) so angeordnet sind, dass sie eine Ausrichtung annehmen, die im Wesentlichen im rechten Winkel zu den Längsrippen (4) verläuft, wenn die Stufenanordnung (3) ihre vollständig auseinandergeklappte Position eingenommen hat.

5. Stufenanordnung nach einem der Ansprüche 2 bis 4, **dadurch gekennzeichnet, dass** die erste Gelenkarmanordnung (11, 11') einen ersten Gelenkarm (18), der an einem Ende an der Welle (10) befestigt ist, und einen zweiten Gelenkarm (19) umfasst, der an einem Ende an einer Querrippe (5) über ein Kugelgelenk (21) verbunden ist, wobei der erste Gelenkarm (18) an dem anderen Ende an dem zweiten Gelenkarm (19) über ein Kugelgelenk (20) verbunden ist.

6. Stufenanordnung nach einem der Ansprüche 2 bis 5, **dadurch gekennzeichnet, dass** die zweite Gelenkarmanordnung (13) einen ersten Gelenkarm (14), der an einem Ende an dem Scharnier (12) der Tür des Fahrzeugs über ein Kugelgelenk (16) verbunden ist, und einen zweiten Gelenkarm (15) umfasst, der an einem Ende an der Welle (10) befestigt ist, wobei der erste Gelenkarm (14) mit dem zweiten Gelenkarm (15) über ein Kugelgelenk (16) verbunden ist.

7. Stufenanordnung nach einem der vorhergehenden Ansprüche, **dadurch gekennzeichnet, dass** die Stufenanordnung (3) wenigstens zwei Plattformen (6) umfasst, die aus Längs- und Querrippen (4, 5) aufgebaut sind und in einer vertikalen Folge angeordnet sind.

8. Stufenanordnung nach einem der vorhergehenden Ansprüche, **dadurch gekennzeichnet, dass** die Stufenanordnung (3) an einer Führungsbahn (8) angebracht ist, die an dem Rahmen (7) der Seitenverkleidung befestigt ist.

9. Stufenanordnung nach einem der Ansprüche 1 bis 3, **dadurch gekennzeichnet, dass** die Stufenanordnung (3) über die Querrippen (5, 5') so, dass sie schwenken kann, mit einer Gleitschiene (22) verbunden ist, die an dem Rahmen (7) der Seitenverkleidung befestigt ist, wobei die Querrippe (5') so angeordnet ist, dass sie entlang der Gleitschiene (22) gleiten kann.

10. Stufenanordnung nach Anspruch 9, **dadurch gekennzeichnet, dass** die Querrippen (5), wenn die Stufenanordnung (3) ihre vollständig auseinandergeklappte Position eingenommen hat, so angeordnet sind, dass sie eine Ausrichtung annehmen, die im Wesentlichen im rechten Winkel zur Längsachse des Fahrzeugs verläuft, während die Längsrippen (4) einen Winkel α mit der Gleitschiene (22) bilden.

11. Stufenanordnung nach Anspruch 10, **dadurch gekennzeichnet, dass** die Größe des Winkels α in dem Bereich von 20 < α < 35 liegt.

12. Fahrzeug mit einer Fahrzeugtür (2) und einer Stufenanordnung (3) nach einem der vorhergehenden Ansprüche, die in der Tür des Fahrzeugs angeordnet ist.

13. Fahrzeug nach Anspruch 12, **dadurch gekennzeichnet, dass** das Fahrzeug aus einem Schwerlastfahrzeug, wie zum Beispiel einem Lastwagen oder einem Radlader, besteht.

## Revendications

1. Marchepied pliant (3) agencé à l'intérieur d'une porte de véhicule (2) d'une cabine (1) d'un véhicule, **caractérisé en ce que** le marchepied pliant (3) comporte plusieurs plates-formes (3) reliées à un mécanisme de bras de liaison (9) commun à celles-ci, ledit mécanisme de bras de liaison (9) comportant un arbre vertical (10) qui est relié à la porte du véhicule (2) et monté de sorte qu'il peut pivoter, le mécanisme de bras de liaison étant agencé (9) pour amener la pluralité de plates-formes (6), tout en tournant autour de l'arbre vertical (10), à prendre toutes une position dépliée ou repliée lorsque la porte du véhicule (2) est respectivement ouverte ou fermée, respectivement, et **en ce que** chacune des plates-formes (6) est constituée de nervures longitudinales et transversales (4, 5), les nervures longitudinales (4) coulissant ensemble et se tenant les unes à côté des autres dans la position repliée.

2. Marchepied selon la revendication 1, **caractérisé en ce que** le mécanisme de bras de liaison (9) comporte de plus un premier agencement de bras de liaison (11, 11') pour chaque plate-forme (6), et un second agencement de bras de liaison (13), et **en ce que** la porte (2) du véhicule est reliée, via le second agencement de bras de liaison (13), audit arbre vertical (10) qui est monté de manière à pouvoir pivoter.

3. Marchepied selon la revendication 2, **caractérisé en ce que** chaque plate-forme (6) est reliée, via le premier agencement de bras de liaison (11, 11') à l'arbre vertical (10) qui est monté de manière pouvoir pivoter.

4. Marchepied selon la revendication 3, **caractérisé en ce que** les nervures longitudinales (4) sont reliées auxdites nervures transversales (5) de sorte qu'elles peuvent pivoter, et **en ce que** les nervures longitudinales (4) ont une orientation qui coïncide essentiellement avec l'axe longitudinal du véhicule, et **en ce que** les nervures transversales (5) sont disposées de façon à prendre une orientation qui est essentiellement perpendiculaire aux nervures longitudinales (4) lorsque le marchepied (3) a pris sa position entièrement dépliée.

5. Marchepied selon l'une quelconque des revendications 2 à 4, **caractérisé en ce que** ledit premier agencement de bras de liaison (11, 11') comporte un premier bras de liaison (18) fixé à une extrémité à l'arbre (10), et un second arbre de liaison (19), relié à une première extrémité à une nervure transversale (5) par un joint à rotule (21), lequel premier bras de liaison (18) est relié à l'autre extrémité au deuxième bras de liaison (19) via un joint à rotule (20).

6. Marchepied selon l'une quelconque des revendications 2 à 5, **caractérisé en ce que** ledit second agencement de bras de liaison (13) comporte un premier bras de liaison (14), relié à une première extrémité à la charnière (12) de la porte du véhicule par un joint à rotule (16), et un deuxième bras de liaison (15), fixé à une première extrémité à l'arbre (10), lequel premier bras de liaison (14) est relié au deuxième bras de liaison (15) par un joint de rotule (16).

7. Marchepied selon l'une quelconque des revendications précédentes, **caractérisé en ce que** le marchepied (3) comporte aux moins deux plates-formes (6), constituées de nervures longitudinales et transversales (4, 5), et agencées selon une séquence verticale.

8. Marchepied selon l'une quelconque des revendications précédentes, **caractérisé en ce que** le marchepied (3) est attaché à une piste (8) fixée au châssis (7) du panneau latéral.

9. Marchepied selon l'une quelconque des revendications 1 à 3, **caractérisé en ce que** le marchepied (3) est relié, via les nervures transversales (5, 5'), de telle manière qu'il peut pivoter, à un rail de coulissement (22) fixé au châssis (7) du panneau latéral, rail de coulissement (22) le long duquel la nervure transversale (5') est agencée pour un coulissement.

10. Marchepied selon la revendication 9, **caractérisé en ce que** les nervures transversales (5) sont agencées pour prendre une orientation essentiellement perpendiculaire à l'axe longitudinal du véhicule lorsque le marchepied (3) a pris sa position entièrement dépliée, alors que les nervures longitudinales (4) forment un angle α avec le rail de coulissement (22).

11. Marchepied selon la revendication 10, **caractérisé en ce que** l'angle α est compris entre 20 < α < 35.

12. Véhicule comportant une porte de véhicule (2) et un marchepied (3) agencé à l'intérieur de la porte du véhicule (2) selon l'une quelconque des revendications précédentes.

13. Véhicule selon la revendication 12, **caractérisé en ce que** le véhicule consiste en un poids lourd, tel qu'un camion ou une chargeuse à pneus.
